# EUROPEAN PATENT SPECIFICATION

(11) **EP 3 188 018 B1**
(45) Date of publication and mention of the grant of the patent: **04.05.2022**
(21) Application number: 16206464.6
(22) Date of filing: 22.12.2016
(51) Int. Cl.: G06F 9/54

(54) **METHOD AND APPARATUS FOR SETTING WAITING TIME DURATION**
VERFAHREN UND VORRICHTUNG ZUR EINSTELLUNG DER WARTEZEITDAUER
PROCÉDÉ ET APPAREIL DE RÉGLAGE DE LA DURÉE DU TEMPS D'ATTENTE

(30) Priority: 28.12.2015 CN 201511000892
(43) Date of publication of application: 05.07.2017
(73) Proprietor: Xiaomi Inc., Beijing 100085 (CN)
(72) Inventor: WANG, Zhongshuai, Beijing, 100085 (CN); YANG, Yizhen, Beijing, 100085 (CN); MA, Ning, Beijing, 100085 (CN)
(74) Representative: Grunert, Marcus

(56) References cited:
- GB-A- 2 502 604
- US-A1- 2002 048 335
-  Mddi Standard ET AL: "VESA Mobile Display Digital Interface Standard Version 1 Copyright 2002-2004 Video Electronics Standards Association VESA Mobile Display Digital Interface Standard", , 23 July 2004 (2004-07-23), XP055237537, Retrieved from the Internet: URL:http://ftp.cis.nctu.edu.tw/csie/Softwa re/X11/private/VeSaSpEcS/VESA_Document_Cen ter_Video_Interface/MDDIv1.pdf [retrieved on 2017-04-21]

## Description

### TECHNICAL FIELD

The present invention relates to the field of computer technologies, and more particularly, to a method and an apparatus for setting a waiting time duration.

### BACKGROUND

With the development of the computer technologies, such mobile terminals as mobile phones have more and more powerful functions, such that such mobile terminals are indispensable in people's daily life. Various parts of the mobile terminal generally need to transmit data to the processor thereof, and these parts typically transmit data to the processor via two paths of level signals. Hereinafter, the course of transmitting data by the parts to the processor is given by using a camera as an example.

In the prior art, after the camera of the mobile terminal picks up an image, the camera generally needs to transmit image data to the processor, and the processor processes the received image data. Data is transmitted between the camera and the processor of the mobile terminal generally by using the Mobile Industry Processor Interface (MIPI) protocol. Each time when data is transmitted, the level signals transmitted by the camera may be categorized into a plurality of stages in terms of time sequence, which are respectively an LP-11 stage (a control mode stage), an LP-01 stage (a high-speed request stage), an LP-00 stage (a preparation stage), an HS-0 stage (a reception waiting stage) and a data transmission stage. In the LP-11 stage, the two paths of level signals are both at a high level; in the LP-01 stage, one of the two paths of level signals is at a high level and the other is at a low level; in the LP-00 stage, the two paths of level signals are both at a low level; in the HS-0 stage, the voltages of the two paths of level signals are increased to be within a voltage range of the differential signals to form differential signals; and in the data transmission stage, the two paths of level signals are maintained in the state of the differential signals for data transmission.

Generally, during the data transmission course, the time duration of the LP-00 stage may be changed due to impacts caused by the line impedance. A waiting time duration may be preconfigured in the processor. When the processor receives data, and after it is detected that an input signal enters from the LP-01 stage to the LP-00 stage (that is, one of the two paths of level signal is maintained at a low level and the other is changed from a high level to a low level), a preset waiting time duration later, the processor starts detecting a start point of the HS-0 stage (that is the voltages of the two paths of level signals are increased to be within the voltage range of the differential signals). Upon detection of the start point, a preset time duration of the HS-0 stage later further, the processor starts detecting data on the differential signals, and may hence obtain the data transmitted by the camera. Based on the MIPI protocol, the above waiting time duration needs to be within the range of a standard time duration stipulated by the MIPI protocol, and the time duration from the end of the waiting time duration to the start of the HS-0 stage also needs to be within the range of the standard time duration stipulated by the MIPI protocol. As such, the processor is capable of correctly receiving data.

Based on the basic principles of the above data transmission, a person skilled in the art generally tests a plurality sample terminals of the same model while setting a waiting time duration of the processor thereof, and respectively detects the time duration of the LP-00 stage of the received signals of the processor of each terminal by using an oscilloscope, calculates an average value of the time durations, and then uses a time duration obtained by dividing the average value by 2 as the preset waiting time duration of the mobile terminals of this model.

During implementation of the present invention, the inventors have identified that at least the following defects exist in the related technologies:

A person skilled in the art uses half of the average value of the time durations of the LP-00 stage of a plurality of sample terminals as the waiting time duration of the processor. With respect to a batch-wise production process, the time durations of the LP-00 stage of the level signals received by the processors of different mobile terminals may be greatly different, and in addition, during use of the mobile terminals the line impedance thereof may be changed due to various reasons, such that the time durations of the LP-00 stage of the level signals received by the processors may be changed accordingly. As such, since each mobile terminal has a constant waiting time duration, with respect to some individual mobile terminal, the time duration from the end of the waiting time duration to the start of the HS-0 stage may be probably not within the range of the standard time duration stipulated by the MIPI protocol, and consequently the data read by the processor may be incorrect.

US 2002/048335 A1 discloses a data transmission and reception system, wherein a reception-side unit determines a phase adjustment of received data relative to a local clock. The reception-side unit includes a means for computing an optimum delay time based, among other data, on externally provided values, which are stored locally. In an alternate embodiment, a transmission-side unit includes a similar mechanism.

### SUMMARY

To overcome the defects existent in the related technologies, the present invention provides a method and an apparatus for setting a waiting time duration. The following technical solutions are employed.
The invention is set out in the appended set of claims. Provided are a method for setting a waiting time duration, an apparatus for setting a waiting time duration and a computer program according to the independent claims; dependent claims relate to preferred embodiments.

According to a first aspect, the method for setting a waiting time duration includes:
controlling a target component to send preset data to a processor for multiple times, and controlling the processor to receive the preset data sent by the target component each time respectively based on different waiting time durations;
determining, from different waiting time durations, a maximum waiting time duration and a minimum waiting time duration that are used by the processor for correctly receiving the preset data; and
determining a to-be-used waiting time duration according to the maximum waiting time duration and the minimum waiting time duration, and storing the determined to-be-used waiting time duration.

Optionally, the step of controlling the processor to receive, respectively based on different waiting time durations, the preset data sent by the target component each time includes:
controlling the processor to receive the preset data sent by the target component each time respectively based on a plurality of waiting time durations having an interval of a preset time duration difference.

In this way, the precision of calculating the waiting time duration may be improved.

Optionally, the step of controlling the processor to receive, respectively based on different waiting time durations, the preset data sent by the target component each time includes:
within the range of a standard time duration stipulated by the MIPI protocol, controlling the processor to receive, respectively based on different waiting time durations, the preset data sent by the target component each time.

In this way, the efficiency in setting the waiting time duration may be improved.

According to the invention, the step of determining, from different waiting time durations, a maximum waiting time duration and a minimum waiting time duration that are used by the processor for correctly receiving the preset data includes:
with respect to a first waiting time duration and a second waiting time duration that are adjacent in the different waiting time durations, if the processor is capable of correctly receiving the preset data by using the first waiting time duration but is incapable of correctly receiving the preset data by using the second waiting time duration, and the first waiting time duration is less than the second waiting time duration, determining that the first waiting time duration is the maximum waiting time duration that is used by the processor for correctly receiving the preset data; and
with respect to a third waiting time duration and a fourth waiting time duration that are adjacent in the different waiting time durations, if the processor is capable of correctly receiving the preset data by using the fourth waiting time duration but is incapable of correctly receiving the preset data by using the third waiting time duration, and the third waiting time duration is less than the fourth waiting time duration, determining that the fourth waiting time duration is the minimum waiting time duration that is used by the processor for correctly receiving the preset data.

In this way, the maximum waiting time duration and the minimum waiting time duration may be correctly determined.

According to the invention, the step of determining a to-be-used waiting time duration according to the maximum waiting time duration and the minimum waiting time duration, and storing the determined to-be-used waiting time duration includes:
determining an average value of the maximum waiting time duration and the minimum waiting time duration, and storing the average value as the to-be-used waiting time duration.

In this way, the waiting time duration may be correctly determined.

According to the invention, the method further includes:
when service data subsequently transmitted by the target component to the processor is detected, receiving the service data based on the to-be-used waiting time duration.

In this way, the processor may correctly receive the service data.

According to a second aspect, the apparatus for setting a waiting time duration includes:
a controlling module, configured to control a target component to send preset data to a processor for multiple times, and control the processor to receive the preset data sent by the target component each time respectively based on different waiting time durations;
a determining module, configured to determine, from different waiting time durations, a maximum waiting time duration and a minimum waiting time duration that are used by the processor for correctly receiving the preset data; and
a storing module, configured to determine a to-be-used waiting time duration according to the maximum waiting time duration and the minimum waiting time duration, and store the determined to-be-used waiting time duration.

Optionally, the controlling module is configured to:
control the processor to receive the preset data sent by the target component each time respectively based on a plurality of waiting time durations having an interval of a preset time duration difference.

Optionally, the controlling module is configured to:
within the range of a standard time duration stipulated by the MIPI protocol, control the processor to receive, respectively based on different waiting time durations, the preset data sent by the target component each time.

According to the invention, the determining module includes a first determining submodule and a second determining submodule, wherein
the first determining submodule is configured to, with respect to a first waiting time duration and a second waiting time duration that are adjacent in the different waiting time durations, if the processor is capable of correctly receiving the preset data by using the first waiting time duration but is incapable of correctly receiving the preset data by using the second waiting time duration, and the first waiting time duration is less than the second waiting time duration, determine that the first waiting time duration is the maximum waiting time duration that is used by the processor for correctly receiving the preset data; and
the second determining submodule is configured to, with respect to a third waiting time duration and a fourth waiting time duration that are adjacent in the different waiting time durations, if the processor is capable of correctly receiving the preset data by using the fourth waiting time duration but is incapable of correctly receiving the preset data by using the third waiting time duration, and the third waiting time duration is less than the fourth waiting time duration, determine that the fourth waiting time duration is the minimum waiting time duration that is used by the processor for correctly receiving the preset data.

According to the invention, the storing module is configured to:
determine an average value of the maximum waiting time duration and the minimum waiting time duration, and store the average value as the to-be-used waiting time duration.

According to the invention, the controlling module is further configured to:
when service data subsequently transmitted by the target component to the processor is detected, receive the service data based on the to-be-used waiting time duration.

According to a third aspect, an apparatus for setting a waiting time duration further includes:
a processor; and
a memory for storing instructions executable by the processor;
wherein the processor is configured to:
control a target component to send preset data to a processor for multiple times, and control the processor to receive the preset data sent by the target component each time respectively based on different waiting time durations;
determine, from different waiting time durations, a maximum waiting time duration and a minimum waiting time duration that are used by the processor for correctly receiving the preset data; and
determine a to-be-used waiting time duration according to the maximum waiting time duration and the minimum waiting time duration, and store the determined to-be-used waiting time duration. Advantageously, the controlling module, the determining module, and the storing module of the apparatus according to the second aspect of the present invention are configured to be implemented into said processor, e. g. by being part of the processor.

According to a fourth aspect, the computer program which, when being executed on a processor, especially on the processor of the apparatus according to the third aspect, performs any one of the above methods.

The technical solutions provided may achieve the following beneficial effects:

According to the present invention, a target component is controlled to send preset data to a processor for multiple times, and the processor is controlled to receive, respectively based on different waiting time durations, the preset data sent by the target component each time; a maximum waiting time duration and a minimum waiting time duration that are used by the processor for correctly receiving the preset data are determined from different waiting time durations; and a to-be-used waiting time duration is determined according to the maximum waiting time duration and the minimum waiting time duration, and the determined to-be-used waiting time duration is stored. In this way, a waiting time duration of the processor may be set for each terminal according to the line impedance thereof, and the processor may correctly receive data.

It shall be appreciated that the above general description and the detailed description hereinafter are only illustrative and interpretative but not limiting.

### BRIEF DESCRIPTION OF THE DRAWINGS

The accompanying drawings herein, which are incorporated into and constitute a part of the specification, illustrate embodiments consistent with the present invention, and together with the specification, serve to explain the principles of the present invention. Among the drawings:
FIG. 1 is a flowchart illustrating a method for setting a waiting time duration according to an exemplary embodiment;
FIG. 2 is a schematic diagram illustrating data transmission according to an exemplary embodiment;
FIG. 3 is a schematic diagram illustrating a method for setting a waiting time duration according to an exemplary embodiment;
FIG. 4 is a schematic structural diagram illustrating a terminal according to an exemplary embodiment;
FIG. 5 is a schematic structural diagram illustrating a terminal according to an exemplary embodiment; and
FIG. 6 is a schematic structural diagram illustrating a terminal according to an exemplary embodiment.

The above drawings are used for illustrating the embodiments of the present invention given hereinafter, and more details will be given hereinafter. These drawings and textual descriptions are not intended to limit the scope defined by the claim, but intended to describe the inventive concept, through specific embodiments, for a person skilled in the art.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

An exemplary embodiment provides a method for setting a waiting time duration. The method for setting a waiting time duration may be applied to a terminal, wherein the terminal may be a mobile phone or the like. A processor, a memory, a camera and the like may be configured in the terminal. The processor may be a central processing unit, which may be configured to set a waiting time duration; the memory may be configured to store data needed for setting a waiting time duration and the received data; and the camera may be configured to pick up images. The terminal may further include an input and output device such as a screen and the like, wherein the screen may display an operation interface of the terminal, and may be a touch screen. In this embodiment, the technical solution is described in detail by using an example in which the terminal is a mobile phone, and other similar cases are thus not described herein any further.

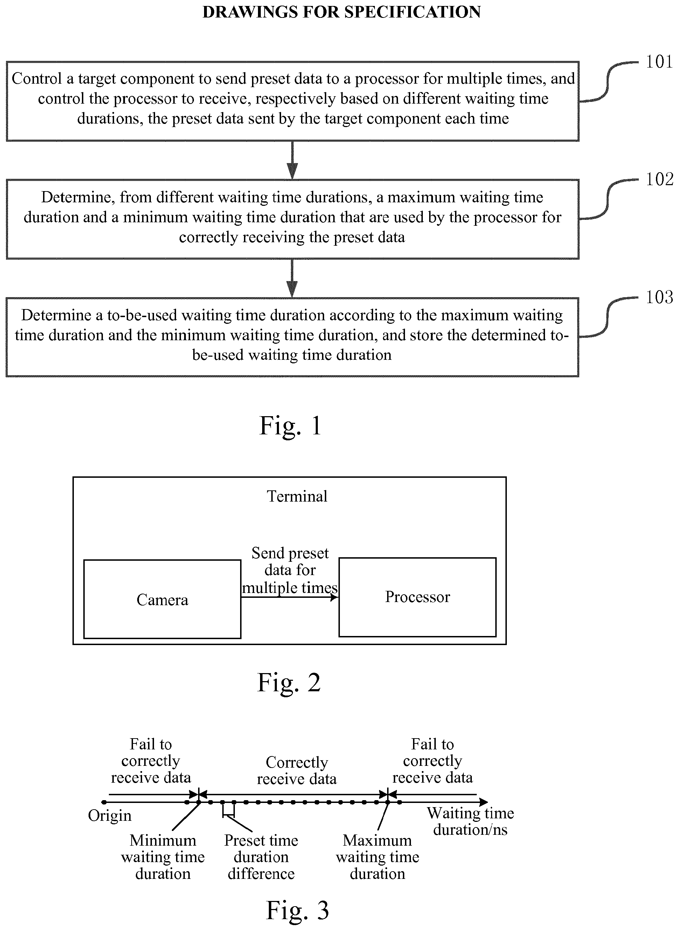

In this embodiment, the technical solution is described in detail by using the case where a camera is used as a target component. As illustrated in FIG. 1, the method may include the following steps:
In step 101, a target component is controlled to send preset data to a processor for multiple times, and the processor is controlled to receive the preset data sent by the target component each time respectively based on different waiting time durations.

In practice, a person skilled in the art may preset a string of preset data (for example, 10012233 and the like), and store the preset data to the terminal. As illustrated in FIG. 2, each time when the terminal is started, the terminal may control the camera to acquire the preset data, and send the preset data to the processor for multiple times. Each time when the preset data is transmitted, the level signals transmitted by the camera may be categorized into a plurality of stages in terms of time sequence, which are respectively an LP-11 stage (a control mode stage), an LP-01 stage (a high-speed request stage), an LP-00 stage (a preparation stage), an HS-0 stage (a reception waiting stage) and a data transmission stage. When receiving data, the processor may receive, based on different waiting time durations, the preset data sent by the target component each time. When it is detected that an input signal enters from the LP-01 stage to the LP-00 stage (that is, one of the two paths of level signals is remained at a low level and the other is changed from a high level to a low level), a preset waiting time duration later, a start point of the HS-0 stage is detected (that is, the voltage values of the two paths of level signals are increased to a voltage range of the differential signals). After the start point is detected, a preset time duration of the HS-0 stage later, the preset data is detected from the differential signals, and the received data is compared with the preset data stored in the terminal. If it is determined that the preset data is absolutely correct, the waiting time duration of the preset data received at this time may be stored, and the detailed information of the preset data received at this time may be stored as correct reception of the data. If it is determined that the preset data is incorrect, the waiting time duration of the preset data received at this time may be stored, and the detailed information of the preset data received at this time may be stored as failure to correctly receive the data.

Optionally, within the range of a standard time duration stipulated by the MIPI protocol, the processor is controlled to receive, respectively based on different waiting time durations, the preset data sent by the target component each time.

In practice, with the range of the standard time duration stipulated by the MIPI protocol, the terminal may control the camera to sent the preset data to the processor for multiple times, and may control the processor to receive, based on different waiting time durations, the preset data sent each time. That is, the processor may correctly receive the preset data each time.

Optionally, the controlling the processor to receive, respectively based on different waiting time durations, the preset data sent by the target component each time may include: controlling the processor to receive the preset data sent by the target component each time respectively based on a plurality of waiting time durations having an interval of a preset time duration difference.

The preset time duration difference may be defined by a person skilled in the art. A smaller preset time duration difference indicates a longer time elapsed for determining the waiting time duration, and in this case, the determined waiting time duration is closer to an intermediate value of the duration of the LP-00 stage of the level signal received by the processor and thus may be considered to be closer to an intermediate value of the duration of the LP-00 stage of the camera. A greater preset time duration difference indicates a shorter time elapsed for determining the waiting time duration, and in this case, the determined waiting time duration is more deviated from an intermediate value of the duration of the LP-00 stage of the level signal received by the processor and thus may be considered to be more deviated from an intermediate value of the duration of the LP-00 stage of the camera. A person skilled in the art may define the preset time duration difference according to the actual needs.

In practice, a person skilled in the art may define a preset waiting time duration TO during which the processor is capable of correctly receiving the preset data sent by the camera, and store the waiting time duration TO into the terminal. After the processor receives the preset data sent by the camera, the terminal controls the processor to receive the preset data according to the preset waiting time duration T0. If the processor fails to correctly receive the preset data (due to the impacts caused by the line impedance during data transmission, the time duration of the LP-00 stage of the level signal received by the processor may be changed), the terminal controls the processor to adaptively adjust TO based on the preset waiting time duration TO until the processor is capable of correctly receiving the preset data, and this time duration is recorded as T1. Afterwards, the preset time duration difference is gradually increased or decreased based on T1, such that the processor is capable of receiving, based on a plurality of waiting time durations having the preset time duration difference, the preset data sent by the camera each time until the processor is incapable of receiving the data sent by the camera, and stores the waiting time duration of receiving the preset data each time and detailed information of receiving the preset data within each waiting time duration. For example, if the time duration during which the processor is capable of firstly receiving the preset data is T1, the terminal controls the processor to receive, based on the waiting time durations T1+, T1+2......T1+n, T1-, T1-2......T1-n, the preset data sent by the camera each time until the processor is incapable of correctly receiving the present data sent by the camera.

In step 102, a maximum waiting time duration and a minimum waiting time duration that are used by the processor for correctly receiving the preset data are determined from different waiting time durations.

In practice, the processor receives, respectively based on different waiting time durations, the preset data sent by the camera, and the terminal records a plurality of different waiting time durations and the corresponding detailed information of receiving the preset data. The terminal determines, from the plurality of different waiting time durations, the maximum waiting time duration and the minimum waiting time duration that are used by the processor for correctly receiving the preset data. Then, the terminal may store the maximum waiting time duration and the minimum waiting time duration.

The maximum waiting time duration and the minimum waiting time duration of the processor are determined as follows: with respect to a first waiting time duration and a second waiting time duration that are adjacent in the different waiting time durations, if the processor is capable of correctly receiving the preset data by using the first waiting time duration but is incapable of correctly receiving the preset data by using the second waiting time duration, and the first waiting time duration is less than the second waiting time duration, it is determined that the first waiting time duration is the maximum waiting time duration that is used by the processor for correctly receiving the preset data; and
with respect to a third waiting time duration and a fourth waiting time duration that are adjacent in the different waiting time durations, if the processor is capable of correctly receiving the preset data by using the fourth waiting time duration but is incapable of correctly receiving the preset data by using the third waiting time duration, and the third waiting time duration is less than the fourth waiting time duration, it is determined that the fourth waiting time duration is the minimum waiting time duration that is used by the processor for correctly receiving the preset data.

In practice, as illustrated in FIG. 3, the terminal searches for two waiting time durations adjacent to each other from the different waiting time durations, i.e., the first waiting time duration and the second waiting time duration. If the processor is capable of correctly receiving the preset data by using the first waiting time duration but is incapable of correctly receiving the preset data by using the second waiting time duration, and the first waiting time duration is less than the second waiting time duration, it may be determined that the first waiting time duration is the maximum waiting time duration for correctly receiving the preset data. For example, the range of the standard time duration stipulated by the MIPI protocol is from 2 ns to 15 ns, and this indicates that the waiting time duration of the LP-00 stage and the time duration when the HS-0 stage is detected upon termination of the waiting time duration need to be within the range of 2 ns to 15 ns, and the duration of the LP-00 stage of the preset data sent by the camera is 15 ns. The processor receives the preset data by using the first waiting time duration 13 ns. In this case, the processor firstly enters from the LP-01 stage to the LP-00 stage, starts detecting a start point of the HS-0 stage 13 ns later, and detects the start point of the HS-0 stage at the time point of 2 ns which is within the range of 2 ns to 15 ns of the standard time duration of the LP-00 stage stipulated by the MIPI protocol; and the processor is capable of correctly receiving the data. The processor receives the preset data by using the second waiting time duration 14 ns. In this case, the processor firstly enters from the LP-01 stage to the LP-00 stage, starts detecting a start point of the HS-0 stage 14 ns later, and detects the start point of the HS-0 stage at the time point of 1 ns which is, however, not within the range of 2 ns to 15 ns of the standard time duration stipulated by the MIPI protocol. As a result, the processor is incapable of correctly receiving the preset data, and thus the first waiting time duration is the maximum waiting time duration, that is, 13 ns.

The terminal searches for two waiting time durations adjacent to each other from the different waiting time durations, i.e., the third waiting time duration and the fourth waiting time duration. If the processor is capable of correctly receiving the preset data by using the fourth waiting time duration but is incapable of correctly receiving the preset data by using the third waiting time duration, and the third waiting time duration is less than the fourth waiting time duration, it may be determined that the fourth waiting time duration is the minimum waiting time duration for correctly receiving the preset data. For example, the range of the standard time duration stipulated by the MIPI protocol is from 2 ns to 15 ns, and this indicates that the waiting time duration of the LP-00 stage and the time duration when the HS-0 stage is detected upon termination of the waiting time duration need to be within the range of 2 ns to 15 ns, and the duration of the LP-00 stage of the preset data sent by the camera is 15 ns. The processor receives the preset data by using the fourth waiting time duration 2 ns. In this case, the processor firstly enters from the LP-01 stage to the LP-00 stage, starts detecting a start point of the HS-0 stage 2 ns later, and detects the start point of the HS-0 stage at the time point of 13 ns which is within the range of 2 ns to 15 ns of the standard time duration stipulated by the MIPI protocol; and the processor is capable of correctly receiving the data. The processor receives the preset data by using the third waiting time duration 1 ns. In this case, the processor firstly enters from the LP-01 stage to the LP-00 stage, starts detecting a start point of the HS-0 stage 1 ns later, and detects the start point of the HS-0 stage at the time point of 14 ns; however, 1 ns is not within the range of 4 ns to 10 ns of the standard time duration stipulated by the MIPI protocol. As a result, the processor is incapable of correctly receiving the preset data, and thus the fourth waiting time duration is the minimum waiting time duration, that is, 2 ns.

In step 103, a to-be-used waiting time duration is determined according to the maximum waiting time duration and the minimum waiting time duration, and the determined to-be-used waiting time duration is stored.

In this embodiment, the terminal may calculate the to-be-used waiting time duration of the processor according to the maximum waiting time duration and the minimum waiting time duration, and then store the to-be-used waiting time duration. In this case, the terminal may control the camera to stop sending the preset data to the processor.

An average value of the maximum waiting time duration and the minimum waiting time duration is taken as the to-be-used waiting time duration, and the corresponding process is: determining an average value of the maximum waiting time duration and the minimum waiting time duration, and storing the average value as the to-be-used waiting time duration.

In practice, upon determining the maximum waiting time duration and the minimum waiting time duration, since the maximum waiting time duration and the minimum waiting time duration are respectively a maximum time duration and a minimum waiting time duration that are used for correctly receiving the preset data, the terminal calculates an average value of the maximum waiting time duration and the minimum waiting time duration, and may consider the average value of the maximum waiting time duration and the minimum waiting time duration to be approximately equal to an intermediate value of the time duration of the LP-00 stage of the level signal received by the processor, and then store the average value of the maximum waiting time duration and the minimum waiting time duration as the waiting time duration of the processor.

Optionally, when service data subsequently transmitted by the target component to the processor is detected, the service data is received based on the to-be-used waiting time duration.

In practice, after the terminal stores the to-be-used waiting time duration, when the processor subsequently receives image data sent by the camera, the terminal may control the processor to compare the image data according to the stored waiting time duration, that is, control detection by the processor to enter from the LP-01 stage to the LP-00 stage. The stored waiting time duration later, the terminal starts detects the start point of the HS-0 stage, and further the preset time duration of the HS-0 stage later, the terminal starts detecting data on the differential signals, and receiving the service data.

According to the embodiments, a target component is controlled to send preset data to a processor for multiple times, and the processor is controlled to receive, respectively based on different waiting time durations, the preset data sent by the target component each time; a maximum waiting time duration and a minimum waiting time duration that are used by the processor for correctly receiving the preset data are determined from different waiting time durations; and a to-be-used waiting time duration is determined according to the maximum waiting time duration and the minimum waiting time duration, and the determined to-be-used waiting time duration is stored. In this way, a waiting time duration of the processor may be set for each terminal according to the line impedance thereof, and the processor may correctly receive data.

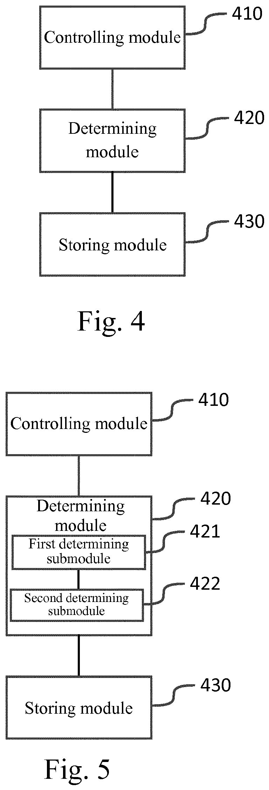

Another exemplary embodiment further provides an apparatus for setting a waiting time duration. As illustrated in FIG. 4, the apparatus includes:
a controlling module 410, configured to control a target component to send preset data to a processor for multiple times, and control the processor to receive the preset data sent by the target component each time respectively based on different waiting time durations;
a determining module 420, configured to determine, from different waiting time durations, a maximum waiting time duration and a minimum waiting time duration that are used by the processor for correctly receiving the preset data; and
a storing module 430, configured to determine a to-be-used waiting time duration according to the maximum waiting time duration and the minimum waiting time duration, and store the determined to-be-used waiting time duration.

Optionally, the controlling module 410 is configured to:
control the processor to receive the preset data sent by the target component each time respectively based on a plurality of waiting time durations having an interval of a preset time duration difference.

Optionally, the controlling module 410 is configured to:
within the range of a standard time duration stipulated by the MIPI protocol, control the processor to receive, respectively based on different waiting time durations, the preset data sent by the target component each time.

As illustrated in FIG. 5, the determining module 420 includes a first determining submodule 421 and a second determining submodule 422, wherein
the first determining submodule 421 is configured to, with respect to a first waiting time duration and a second waiting time duration that are adjacent in the different waiting time durations, if the processor is capable of correctly receiving the preset data by using the first waiting time duration but is incapable of correctly receiving the preset data by using the second waiting time duration, and the first waiting time duration is less than the second waiting time duration, determine that the first waiting time duration is the maximum waiting time duration that is used by the processor for correctly receiving the preset data; and
the second determining submodule 422 is configured to, with respect to a third waiting time duration and a fourth waiting time duration that are adjacent in the different waiting time durations, if the processor is capable of correctly receiving the preset data by using the fourth waiting time duration but is incapable of correctly receiving the preset data by using the third waiting time duration, and the third waiting time duration is less than the fourth waiting time duration, determine that the fourth waiting time duration is the minimum waiting time duration that is used by the processor for correctly receiving the preset data.

The storing module 430 is configured to:
determine an average value of the maximum waiting time duration and the minimum waiting time duration, and store the average value as the to-be-used waiting time duration.

Optionally, the controlling module 410 is further configured to:
when service data subsequently transmitted by the target component to the processor is detected, receive the service data based on the to-be-used waiting time duration.

According to the embodiments, a target component is controlled to send preset data to a processor for multiple times, and the processor is controlled to receive, respectively based on different waiting time durations, the preset data sent by the target component each time; a maximum waiting time duration and a minimum waiting time duration that are used by the processor for correctly receiving the preset data are determined from different waiting time durations; and a to-be-used waiting time duration is determined according to the maximum waiting time duration and the minimum waiting time duration, and the determined to-be-used waiting time duration is stored. In this way, a waiting time duration of the processor may be set for each terminal according to the line impedance thereof, and the processor may correctly receive data.

It should be noted that, during setting of a waiting time duration by the apparatuses according to the above embodiments, the apparatuses are described by only using division of the above functional modules as examples. In practice, the functions may be assigned to different functional modules for implementation as required. To be specific, the internal structure of the apparatus is divided into different functional modules to implement all or part of the above-described functions. In addition, the apparatuses for setting a waiting time duration according to the above embodiments are based on the same inventive concept as the methods for setting a waiting time duration according to the embodiments. The specific implementation is elaborated in the method embodiments, which is not described herein any further.

Another exemplary embodiment provides a schematic structural diagram of a terminal. The terminal may be a mobile phone or the like.

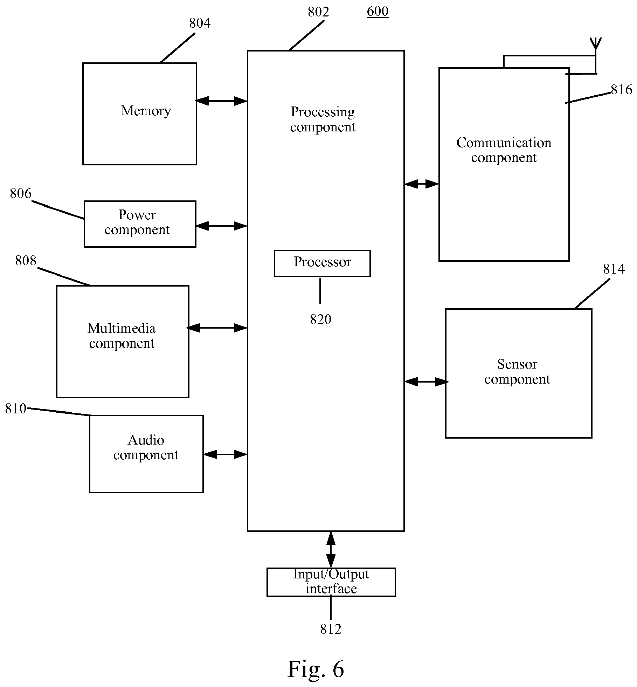

Referring to FIG. 6, the terminal 600 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 600, such as the operations associated with display, telephone calls, data communications, camera operations, and recording operations. The processing component 802 may include one or more processors 820 to execute instructions to perform all or a part of the steps in the above-described methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the terminal 600. Examples of such data include instructions for any application or method operated on the terminal 600, contact data, phonebook data, messages, pictures, videos, and the like. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 600. The power component 806 may include a power management system, one or more power supplies, and other components associated with the generation, management, and distribution of power in an audio input/output device 600.

The multimedia component 808 includes a screen providing an output interface between the terminal 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive external multimedia data while the terminal 600 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the audio input/output device 600 is in an operation mode, such as a call mode, a recording mode, or a voice recognition mode. The received audio signal may be further stored in the memory 804 or transmitted via the communication component 816.

The I/O interface 812 provides an interface between the processing component 802 and a peripheral interface module, such as a keyboard, a click wheel, a button, or the like. The buttons may include, but are not limited to, a home button, a volume button, a starting button, and a locking button.

The sensor component 814 includes one or more sensors to provide status assessments of various aspects of the terminal 600. For example, the sensor component 814 may detect an open/closed status of the terminal 600, relative positioning of components, e.g., the display and the keypad, of the terminal 600, a change in position of the terminal 814 or a component of the terminal 600, a presence or absence of user contact with the terminal 600, an orientation or an acceleration/deceleration of the terminal 600, and a change in temperature of the terminal 600. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communications, wired or wirelessly, between the terminal 600 and other devices. The terminal 600 may access a wireless network based on a communication standard, such as WiFi, 2Q or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as the memory 804 including instructions, executable by the processor 820 in the terminal 600, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

Optionally, a non-transitory computer-readable storage medium is provided. When instructions stored in the storage medium are executed by a processor of a terminal, the terminal is caused to perform the above method, wherein the method includes:
controlling a target component to send preset data to a processor (the same or another processor) for multiple times, and controlling the processor to receive the preset data sent by the target component each time respectively based on different waiting time durations;
determining, from different waiting time durations, a maximum waiting time duration and a minimum waiting time duration that are used by the processor for correctly receiving the preset data; and
determining a to-be-used waiting time duration according to the maximum waiting time duration and the minimum waiting time duration, and storing the determined to-be-used waiting time duration.

Optionally, the controlling the processor to receive, respectively based on different waiting time durations, the preset data sent by the target component each time respectively includes:
controlling the processor to receive the preset data sent by the target component each time respectively based on a plurality of waiting time durations having an interval of a preset time duration difference.

Optionally, the controlling the processor to receive, respectively based on different waiting time durations, the preset data sent by the target component each time respectively includes:
within the range of a standard time duration stipulated by the MIPI protocol, controlling the processor to receive, respectively based on different waiting time durations, the preset data sent by the target component each time.

Optionally, the determining, from different waiting time durations, a maximum waiting time duration and a minimum waiting time duration that are used by the processor for correctly receiving the preset data includes:
with respect to a first waiting time duration and a second waiting time duration that are adjacent in the different waiting time durations, if the processor is capable of correctly receiving the preset data by using the first waiting time duration but is incapable of correctly receiving the preset data by using the second waiting time duration, and the first waiting time duration is less than the second waiting time duration, determining that the first waiting time duration is the maximum waiting time duration that is used by the processor for correctly receiving the preset data; and
with respect to a third waiting time duration and a fourth waiting time duration that are adjacent in the different waiting time durations, if the processor is capable of correctly receiving the preset data by using the fourth waiting time duration but is incapable of correctly receiving the preset data by using the third waiting time duration, and the third waiting time duration is less than the fourth waiting time duration, determining that the fourth waiting time duration is the minimum waiting time duration that is used by the processor for correctly receiving the preset data.

Optionally, the determining a to-be-used waiting time duration according to the maximum waiting time duration and the minimum waiting time duration, and storing the determined to-be-used waiting time duration includes:
determining an average value of the maximum waiting time duration and the minimum waiting time duration, and storing the average value as the to-be-used waiting time duration.

Optionally, the method further includes:
when service data subsequently transmitted by the target component to the processor is detected, receiving the service data based on the to-be-used waiting time duration.

According to the embodiments, a target component is controlled to send preset data to a processor for multiple times, and the processor is controlled to receive, respectively based on different waiting time durations, the preset data sent by the target component each time; a maximum waiting time duration and a minimum waiting time duration that are used by the processor for correctly receiving the preset data are determined from different waiting time durations; and a to-be-used waiting time duration is determined according to the maximum waiting time duration and the minimum waiting time duration, and the determined to-be-used waiting time duration is stored. In this way, a waiting time duration of the processor may be set for each terminal according to the line impedance thereof, and the processor may correctly receive data.

Other embodiments will be apparent to those skilled in the art from consideration of the specification and practice disclosed herein. This application is intended to cover any variations, uses, or adaptations following the general principles thereof and including such departures from the present invention as coming within common knowledge or customary technical means in the art. It is intended that the specification and embodiments be considered as exemplary only, with a true scope of the present invention being indicated by the appended claims.

It will be appreciated that the present invention is not limited to the exact construction that has been described above and illustrated in the accompanying drawings, and that various modifications and changes can be made without departing from the scope thereof. The scope of the present invention is only defined by the appended claims.

## Claims

1. A method for setting a waiting time duration, comprising:
controlling a target component to send preset data to a processor and controlling a processor to receive the preset data according to a preset waiting time duration; and
in response that the processor failing to correctly receive the preset data:
controlling the processor to adaptively adjust the preset waiting time duration until the processor is capable of correctly receiving the preset data;
controlling (101) the target component to send preset data to the processor for multiple times, and controlling the processor to receive the preset data sent by the target component each time of the multiple times, respectively based on a different waiting time duration, wherein a preset time duration is gradually increased by a preset waiting time duration difference until the processor is incapable of correctly receiving the preset data and gradually decreased by the preset waiting time duration difference until the processor is incapable of correctly receiving the preset data thereby obtaining the different waiting time durations;
determining (102), from the different waiting time durations, a maximum waiting time duration and a minimum waiting time duration that are used by the processor for correctly receiving the preset data,
with respect to a first waiting time duration and a second waiting time duration that are adjacent in the different waiting time durations, if the processor is capable of correctly receiving the preset data by using the first waiting time duration but is incapable of correctly receiving the preset data by using the second waiting time duration, and the first waiting time duration is less than the second waiting time duration, determining that the first waiting time duration is a maximum waiting time duration that is used by the processor for correctly receiving the preset data; and
with respect to a third waiting time duration and a fourth waiting time duration that are adjacent in the different waiting time durations, if the processor is capable of correctly receiving the preset data by using the fourth waiting time duration but is incapable of correctly receiving the preset data by using the third waiting time duration, and the third waiting time duration is less than the fourth waiting time duration, determining that the fourth waiting time duration is a minimum waiting time duration that is used by the processor for correctly receiving the preset data;
determining (103) an average value of the maximum waiting time duration and the minimum waiting time duration as a to-be-used waiting time duration, and storing the determined to-be-used waiting time duration.

2. The method according to claim 1, **characterized in that** the step of controlling the processor to receive, respectively based on different waiting time durations, the preset data sent by the target component each time comprises:
controlling the processor to receive the preset data sent by the target component each time respectively based on a plurality of waiting time durations having an interval of a preset time duration difference.

3. The method according to claim 1 or 2, **characterized in that** the step of controlling the processor to receive, respectively based on different waiting time durations, the preset data sent by the target component each time comprises:
within a range of a standard time duration 2ns-15ns, controlling the processor to receive, respectively based on different waiting time durations, the preset data sent by the target component each time.

4. An apparatus for setting a waiting time duration, comprising:
a controlling module (410), configured to
control a target component to send preset data to a processor and controlling a processor to receive the preset data according to a preset waiting time duration; and
in response that the processor failing to correctly receive the preset data:
control the processor to adaptively adjust the preset waiting time duration until the processor is capable of correctly receiving the preset data;
control a target component to send preset data to the processor for multiple times, and control the processor to receive the preset data sent by the target component each time of the multiple times, respectively based on a different waiting time duration, wherein a preset time duration is gradually increased by a preset waiting time duration difference until the processor is incapable of correctly receiving the preset data and gradually decreased by the preset waiting time duration difference until the processor is incapable of correctly receiving the preset data thereby obtaining the different waiting time durations;
a determining module (420), configured to determine, from the different waiting time durations, a maximum waiting time duration and a minimum waiting time duration that are used by the processor for correctly receiving the preset data; and
a storing module (430), configured to determine an average value of the maximum waiting time duration and the minimum waiting time duration as a to-be-used waiting time duration, and store the determined to-be-used waiting time duration;
wherein the determining module (420) comprises a first determining submodule (421) and a second determining submodule (422), wherein
the first determining submodule (421) is configured to, with respect to a first waiting time duration and a second waiting time duration that are adjacent in the different waiting time durations, if the processor is capable of correctly receiving the preset data by using the first waiting time duration but is incapable of correctly receiving the preset data by using the second waiting time duration, and the first waiting time duration is less than the second waiting time duration, determine that the first waiting time duration is the maximum waiting time duration that is used by the processor for correctly receiving the preset data; and
the second determining submodule (422) is configured to, with respect to a third waiting time duration and a fourth waiting time duration that are adjacent in the different waiting time durations, if the processor is capable of correctly receiving the preset data by using the fourth waiting time duration but is incapable of correctly receiving the preset data by using the third waiting time duration, and the third waiting time duration is less than the fourth waiting time duration, determine that the fourth waiting time duration is the minimum waiting time duration that is used by the processor for correctly receiving the preset data.

5. The apparatus according to claim 4, **characterized in that** the controlling module (410) is configured to:
control the processor to receive the preset data sent by the target component each time respectively based on a plurality of waiting time durations having an interval of a preset time duration difference.

6. The apparatus according to claim 4 or 5, **characterized in that** the controlling module (410) is configured to:
within a range of a standard time duration 2ns-15ns, control the processor to receive, respectively based on different waiting time durations, the preset data sent by the target component each time.

7. An apparatus for setting a waiting time duration according to any one of the claims 4 to 6, comprising:
at least one processor (820); and
a memory (804) for storing instructions executable by the at least one processor (820);
wherein the controlling module (410), the determining module (420), and the storing module (430) are configured to be implemented into the at least one processor (820).

8. A computer program product comprising instructions, which when executed on a processor of an apparatus according to claim 7, cause the apparatus to perform a method according to any one of claims 1 to 3.

## Patentansprüche

1. Verfahren zum Einstellen einer Wartezeitdauer, umfassend:
Steuern einer Zielkomponente, um voreingestellte Daten an einen Prozessor zu senden, und Steuern eines Prozessors, um die voreingestellten Daten gemäß einer voreingestellten Wartezeitdauer zu empfangen; und
als Reaktion darauf, dass der Prozessor die voreingestellten Daten nicht korrekt empfängt:
Steuerung des Prozessors zur adaptiven Anpassung der voreingestellten Wartezeitdauer, bis der Prozessor in der Lage ist, die voreingestellten Daten korrekt zu empfangen;
Steuern (101) der Zielkomponente, um voreingestellte Daten mehrmals an den Prozessor zu senden, und Steuern des Prozessors, um die von der Zielkomponente gesendeten voreingestellten Daten jedes Mal der mehreren Male zu empfangen, jeweils basierend auf einer unterschiedlichen Wartezeitdauer, wobei eine voreingestellte Zeitdauer allmählich um eine voreingestellte Wartezeitdauerdifferenz erhöht wird, bis der Prozessor nicht in der Lage ist, die voreingestellten Daten korrekt zu empfangen, und allmählich um die voreingestellte Wartezeitdauerdifferenz verringert wird, bis der Prozessor nicht in der Lage ist, die voreingestellten Daten korrekt zu empfangen, wodurch die unterschiedlichen Wartezeitdauern erhalten werden;
Bestimmen (102) einer maximalen Wartezeitdauer und einer minimalen Wartezeitdauer aus den verschiedenen Wartezeitdauern, die vom Prozessor für den korrekten Empfang der voreingestellten Daten verwendet werden,
in Bezug auf eine erste Wartezeitdauer und eine zweite Wartezeitdauer, die in den unterschiedlichen Wartezeitdauern benachbart sind, wenn der Prozessor in der Lage ist, die voreingestellten Daten unter Verwendung der ersten Wartezeitdauer korrekt zu empfangen, aber nicht in der Lage ist, die voreingestellten Daten unter Verwendung der zweiten Wartezeitdauer korrekt zu empfangen, und die erste Wartezeitdauer kleiner ist als die zweite Wartezeitdauer, Bestimmen, dass die erste Wartezeitdauer eine maximale Wartezeitdauer ist, die von dem Prozessor für den korrekten Empfang der voreingestellten Daten verwendet wird; und
in Bezug auf eine dritte Wartezeitdauer und eine vierte Wartezeitdauer, die in den verschiedenen Wartezeitdauern benachbart sind, wenn der Prozessor in der Lage ist, die voreingestellten Daten korrekt zu empfangen, indem er die vierte Wartezeitdauer verwendet, aber nicht in der Lage ist, die voreingestellten Daten korrekt zu empfangen, indem er die dritte Wartezeitdauer verwendet, und die dritte Wartezeitdauer kleiner ist als die vierte Wartezeitdauer, Bestimmen, dass die vierte Wartezeitdauer eine minimale Wartezeitdauer ist, die vom Prozessor für den korrekten Empfang der voreingestellten Daten verwendet wird;
Bestimmen (103) eines Durchschnittswerts der maximalen Wartezeitdauer und der minimalen Wartezeitdauer als eine zu verwendende Wartezeitdauer, und Speichern der bestimmten zu verwendenden Wartezeitdauer.

2. Verfahren nach Anspruch 1, **dadurch gekennzeichnet, dass** der Schritt der Steuerung des Prozessors zum Empfang der von der Zielkomponente gesendeten voreingestellten Daten jeweils auf der Grundlage unterschiedlicher Wartezeitdauern umfasst:
Steuern des Prozessors, um die von der Zielkomponente gesendeten voreingestellten Daten jeweils auf der Grundlage einer Vielzahl von Wartezeitdauern mit einem Intervall einer voreingestellten Zeitdifferenz zu empfangen.

3. Verfahren nach Anspruch 1 oder 2, **dadurch gekennzeichnet, dass** der Schritt der Steuerung des Prozessors zum Empfang der von der Zielkomponente gesendeten voreingestellten Daten jeweils auf der Grundlage unterschiedlicher Wartezeitdauern umfasst:
innerhalb eines Bereichs einer Standardzeitdauer von 2ns-15ns, wobei der Prozessor so gesteuert wird, dass er die von der Zielkomponente gesendeten voreingestellten Daten jedes Mal auf der Grundlage unterschiedlicher Wartezeitdauern empfängt.

4. Vorrichtung zum Einstellen einer Wartezeitdauer, umfassend:
ein Steuermodul (410), das so konfiguriert ist, dass es
eine Zielkomponente steuert, um voreingestellte Daten an einen Prozessor zu senden, und einen Prozessor steuert, um die voreingestellten Daten gemäß einer voreingestellten Wartezeitdauer zu empfangen; und
als Reaktion darauf, dass der Prozessor die voreingestellten Daten nicht korrekt empfangen hat:
den Prozessor zu steuern, um die voreingestellte Wartezeitdauer adaptiv anzupassen, bis der Prozessor in der Lage ist, die voreingestellten Daten korrekt zu empfangen;
eine Zielkomponente steuert, um voreingestellte Daten für mehrere Male an den Prozessor zu senden, und den Prozessor steuert, um die von der Zielkomponente gesendeten voreingestellten Daten jedes Mal der mehreren Male zu empfangen, jeweils basierend auf einer unterschiedlichen Wartezeitdauer, wobei eine voreingestellte Zeitdauer allmählich um eine voreingestellte Wartezeitdauerdifferenz erhöht wird, bis der Prozessor nicht in der Lage ist, die voreingestellten Daten korrekt zu empfangen, und allmählich um die voreingestellte Wartezeitdauerdifferenz verringert wird, bis der Prozessor nicht mehr in der Lage ist, die voreingestellten Daten korrekt zu empfangen, wodurch die unterschiedlichen Wartezeitdauern erhalten werden;
ein Bestimmungsmodul (420), das konfiguriert ist, um aus den verschiedenen Wartezeitdauern eine maximale Wartezeitdauer und eine minimale Wartezeitdauer zu bestimmen, die von dem Prozessor für den korrekten Empfang der voreingestellten Daten verwendet werden; und
ein Speichermodul (430), das so konfiguriert ist, dass es einen Durchschnittswert der maximalen Wartezeitdauer und der minimalen Wartezeitdauer als eine zu verwendende Wartezeitdauer bestimmt und die bestimmte zu verwendende Wartezeitdauer speichert;
wobei das Bestimmungsmodul (420) ein erstes Bestimmungs-Submodul (421) und ein zweites Bestimmungs-Submodul (422) umfasst, wobei
das erste Bestimmungs-Submodul (421) konfiguriert ist, um in Bezug auf eine erste Wartezeitdauer und eine zweite Wartezeitdauer, die in den unterschiedlichen Wartezeitdauern benachbart sind, wenn der Prozessor in der Lage ist, die voreingestellten Daten unter Verwendung der ersten Wartezeitdauer korrekt zu empfangen, aber nicht in der Lage ist, die voreingestellten Daten unter Verwendung der zweiten Wartezeitdauer korrekt zu empfangen, und die erste Wartezeitdauer kleiner als die zweite Wartezeitdauer ist, zu bestimmen, dass die erste Wartezeitdauer die maximale Wartezeitdauer ist, die von dem Prozessor zum korrekten Empfang der voreingestellten Daten verwendet wird; und
das zweite Bestimmungs-Submodul (422) konfiguriert ist, um in Bezug auf eine dritte Wartezeitdauer und eine vierte Wartezeitdauer, die in den unterschiedlichen Wartezeitdauern benachbart sind, wenn der Prozessor in der Lage ist, die voreingestellten Daten unter Verwendung der vierten Wartezeitdauer korrekt zu empfangen, aber nicht in der Lage ist, die voreingestellten Daten unter Verwendung der dritten Wartezeitdauer korrekt zu empfangen, und die dritte Wartezeitdauer kleiner als die vierte Wartezeitdauer ist, zu bestimmen, dass die vierte Wartezeitdauer die minimale Wartezeitdauer ist, die von dem Prozessor für den korrekten Empfang der voreingestellten Daten verwendet wird.

5. Vorrichtung nach Anspruch 4, **dadurch gekennzeichnet, dass** das Steuermodul (410) so konfiguriert ist, dass es:
den Prozessor so steuert, dass er die von der Zielkomponente gesendeten voreingestellten Daten jeweils auf der Grundlage einer Vielzahl von Wartezeitdauern mit einem Intervall einer voreingestellten Zeitdifferenz empfängt.

6. Vorrichtung nach Anspruch 4 oder 5, **dadurch gekennzeichnet, dass** das Steuermodul (410) konfiguriert ist, um:
innerhalb eines Bereichs einer Standardzeitdauer von 2ns-15ns den Prozessor so zu steuern, dass er die von der Zielkomponente gesendeten voreingestellten Daten jedes Mal auf der Grundlage unterschiedlicher Wartezeitdauern empfängt.

7. Vorrichtung zum Einstellen einer Wartezeitdauer nach einem der Ansprüche 4 bis 6, umfassend:
mindestens einen Prozessor (820); und
einen Speicher (804) zum Speichern von Anweisungen, die von dem mindestens einen Prozessor (820) ausgeführt werden können;
wobei das Steuermodul (410), das Bestimmungsmodul (420) und das Speichermodul (430) so konfiguriert sind, dass sie in dem mindestens einen Prozessor (820) implementiert werden.

8. Computerprogrammprodukt mit Anweisungen, die, wenn sie auf einem Prozessor einer Vorrichtung nach Anspruch 7 ausgeführt werden, die Vorrichtung veranlassen, ein Verfahren nach einem der Ansprüche 1 bis 3 durchzuführen.

## Revendications

1. Procédé permettant de fixer une durée de temps d'attente, comprenant:
commander un composant cible pour envoyer des données prédéfinies à un processeur et commander un processeur pour recevoir les données prédéfinies selon une durée d'attente prédéfinie; et
en réponse à l'échec du processeur à recevoir correctement les données prédéfinies:
commander le processeur pour ajuster de manière adaptative la durée de temps d'attente prédéfinie jusqu'à ce que le processeur soit capable de recevoir correctement les données prédéfinies;
commander (101) le composant cible pour envoyer des données prédéfinies au processeur pour des temps multiples, et commander le processeur pour recevoir les données prédéfinies envoyées par le composant cible chaque fois des temps multiples, respectivement sur la base d'une durée de temps d'attente différente, dans lequel une durée de temps prédéfinie est progressivement augmentée d'une différence de durée de temps d'attente prédéfinie jusqu'à ce que le processeur soit incapable de recevoir correctement les données prédéfinies et progressivement diminuée de la différence de durée de temps d'attente prédéfinie jusqu'à ce que le processeur soit incapable de recevoir correctement les données prédéfinies, obtenant ainsi les différentes durées de temps d'attente;
déterminer (102), à partir des différentes durées de temps d'attente, une durée de temps d'attente maximale et une durée de temps d'attente minimale qui sont utilisées par le processeur pour recevoir correctement les données prédéfinies,
par rapport à une première durée d'attente et à une seconde durée d'attente qui sont adjacentes dans les différentes durées d'attente, si le processeur est capable de recevoir correctement les données prédéfinies en utilisant la première durée d'attente mais est incapable de recevoir correctement les données prédéfinies en utilisant la seconde durée d'attente, et la première durée d'attente est inférieure à la seconde durée d'attente, déterminer que la première durée d'attente est une durée d'attente maximale qui est utilisée par le processeur pour recevoir correctement les données prédéfinies; et
par rapport à une troisième durée d'attente et une quatrième durée d'attente qui sont adjacentes dans les différentes durées d'attente, si le processeur est capable de recevoir correctement les données prédéfinies en utilisant la quatrième durée d'attente mais est incapable de recevoir correctement les données prédéfinies en utilisant la troisième durée d'attente, et la troisième durée d'attente est inférieure à la quatrième durée d'attente, déterminer que la quatrième durée d'attente est une durée d'attente minimale qui est utilisée par le processeur pour recevoir correctement les données prédéfinies;
déterminer (103) une valeur moyenne de la durée de temps d'attente maximale et de la durée de temps d'attente minimale en tant que durée de temps d'attente à utiliser, et stocker la durée de temps d'attente à utiliser déterminée.

2. Procédé selon la revendication 1, **caractérisé en ce que** l'étape consistant à commander le processeur pour recevoir, respectivement sur la base de différentes durées d'attente, les données prédéfinies envoyées par le composant cible à chaque fois comprend:
commander le processeur pour recevoir les données prédéfinies envoyées par le composant cible chaque fois respectivement sur la base d'une pluralité de durées de temps d'attente ayant un intervalle d'une différence de durée de temps prédéfinie.

3. Procédé selon la revendication 1 ou 2, **caractérisé en ce que** l'étape consistant à commander le processeur pour recevoir, respectivement sur la base de différentes durées d'attente, les données prédéfinies envoyées par le composant cible à chaque fois comprend:
dans une plage d'une durée de temps standard de 2ns-15ns, commander le processeur pour recevoir, respectivement sur la base de différentes durées de temps d'attente, les données prédéfinies envoyées par le composant cible à chaque fois.

4. Un appareil pour régler une durée de temps d'attente, comprenant:
un module de contrôle (410), configuré pour
commander un composant cible pour envoyer des données prédéfinies à un processeur et commander un processeur pour recevoir les données prédéfinies selon une durée d'attente prédéfinie; et
en réponse à l'échec du processeur à recevoir correctement les données prédéfinies:
commander le processeur pour ajuster de manière adaptative la durée de temps d'attente prédéfinie jusqu'à ce que le processeur soit capable de recevoir correctement les données prédéfinies;
commander un composant cible d'envoyer des données prédéfinies au processeur pour des temps multiples, et commander au processeur de recevoir les données prédéfinies envoyées par le composant cible chaque fois des temps multiples, respectivement sur la base d'une durée de temps d'attente différente, dans lequel une durée de temps prédéfinie est progressivement augmentée d'une différence de durée de temps d'attente prédéfinie jusqu'à ce que le processeur soit incapable de recevoir correctement les données prédéfinies et progressivement diminuée de la différence de durée de temps d'attente prédéfinie jusqu'à ce que le processeur soit incapable de recevoir correctement les données prédéfinies, obtenant ainsi les différentes durées de temps d'attente;
un module de détermination (420), configuré pour déterminer, à partir des différentes durées d'attente, une durée d'attente maximale et une durée d'attente minimale qui sont utilisées par le processeur pour recevoir correctement les données prédéfinies; et
un module de stockage (430), configuré pour déterminer une valeur moyenne de la durée maximale du temps d'attente et de la durée minimale du temps d'attente en tant que durée du temps d'attente à utiliser, et stocker la durée déterminée du temps d'attente à utiliser;
dans lequel le module de détermination (420) comprend un premier sous-module de détermination (421) et un second sous-module de détermination (422), dans lequel
le premier sous-module de détermination (421) est configuré pour, par rapport à une première durée de temps d'attente et une seconde durée de temps d'attente qui sont adjacentes dans les différentes durées de temps d'attente, si le processeur est capable de recevoir correctement les données prédéfinies en utilisant la première durée de temps d'attente mais est incapable de recevoir correctement les données prédéfinies en utilisant la seconde durée de temps d'attente, et la première durée de temps d'attente est inférieure à la seconde durée de temps d'attente, déterminer que la première durée de temps d'attente est la durée de temps d'attente maximale qui est utilisée par le processeur pour recevoir correctement les données prédéfinies; et
le second sous-module de détermination (422) est configuré pour, par rapport à une troisième durée de temps d'attente et une quatrième durée de temps d'attente qui sont adjacentes dans les différentes durées de temps d'attente, si le processeur est capable de recevoir correctement les données prédéfinies en utilisant la quatrième durée de temps d'attente mais est incapable de recevoir correctement les données prédéfinies en utilisant la troisième durée de temps d'attente, et la troisième durée de temps d'attente est inférieure à la quatrième durée de temps d'attente, déterminer que la quatrième durée de temps d'attente est la durée de temps d'attente minimale qui est utilisée par le processeur pour recevoir correctement les données prédéfinies.

5. Appareil selon la revendication 4, **caractérisé en ce que** le module de commande (410) est configuré pour:
commander le processeur pour recevoir les données prédéfinies envoyées par le composant cible chaque fois respectivement sur la base d'une pluralité de durées de temps d'attente ayant un intervalle d'une différence de durée de temps prédéfinie.

6. Appareil selon la revendication 4 ou 5, **caractérisé en ce que** le module de commande (410) est configuré pour:
dans une plage d'une durée de temps standard de 2ns-15ns, commander le processeur pour recevoir, respectivement sur la base de différentes durées de temps d'attente, les données prédéfinies envoyées par le composant cible à chaque fois.

7. Dispositif de réglage d'une durée de temps d'attente selon l'une quelconque des revendications 4 à 6, comprenant:
au moins un processeur (820); et
une mémoire (804) pour stocker des instructions exécutables par le au moins un processeur (820);
dans lequel le module de commande (410), le module de détermination (420) et le module de stockage (430) sont configurés pour être mis en oeuvre dans le au moins un processeur (820).

8. Produit de programme informatique comprenant des instructions qui, lorsqu'elles sont exécutées sur un processeur d'un appareil selon la revendication 7, amènent l'appareil à exécuter le procédé selon l'une quelconque des revendications 1 à 3.
